# EUROPÄISCHE PATENTANMELDUNG

(11) **EP 0 768 349 A1**
(43) Veröffentlichungstag der Anmeldung: **16.04.1997**
(21) Anmeldenummer: 96115889.6
(22) Anmeldetag: 04.10.1996
(51) Int. Cl.: C09D 11/10, C09D 11/08, C08G 8/34

(54) **Modifizierte Naturharzsäure-Aldehyd-Addukte**

(30) Priorität: 13.10.1995 DE 19538161
(71) Anmelder: Vianova Resins GmbH, 55252 Mainz-Kastel (DE)
(72) Erfinder: Bender, Albert, Dr., 55130 Mainz (DE); Giencke, Astrid, Dr., 65719 Hofheim (DE)

(57) **Zusammenfassung**

Modifizierte Naturharzsäureester, die aus Einheiten aus Verbindungen jeder der Gruppen
A) Naturharze und Naturharzsäuren,
B) Aldehyde und Aldehydacetale,
C) Alkohole mit mindestens zwei Hydroxylgruppen,
D) Metallsalze
sowie gegebenenfalls aus Verbindungen einer oder mehrer der Gruppen
E) α,β-ethylenisch ungesättigte Carbonsäuren und deren Anhydride,
F) Fettsäuren und Fettsäureester,
G) ethylenisch ungesättigte Kohlenwasserstoffharze
bestehen, eignen sich in Pigmentanreibungen und Pigmentkonzentraten für Druckfarben.

## Beschreibung

Die Erfindung betrifft modifizierte Naturharzsäureester, Verfahren zu deren Herstellung durch Umsetzung von Naturharzsäuren mit Aldehyden, Polyolen und Metallsalzen sowie deren Verwendung als Bindemittelharze in Druckfarben.

Es ist bereits bekannt, Phenolharz-modifizierte Naturharzsäureester als Bindemittelharze in Druckfarben zu verwenden, insbesondere für den Offsetdruck und den Illustrationstiefdruck mit Toluol. Gemäß EP-A 0 666 294 werden modifizierte Naturharzsäureester durch Umsetzung von Naturharzen oder Naturharzsäuren mit α,β-olefinisch ungesättigten Carbonsäuren oder deren Anhydriden, Phenol-Aldehyd-Kondensationsprodukten wie Resolen oder Novolaken, Veresterungsmitteln und gegebenenfalls weiteren Modifizierungsmitteln wie Fettsäuren oder Kohlenwasserstoffharzen hergestellt. Bei der Herstellung dieser Phenolharzmodifizierten Naturharzsäureester werden üblicherweise Salze einwertiger oder auch zweiwertiger Metalle als Katalysator benötigt. Dabei ist auch bekannt, das Phenolharz in der Naturharzschmelze aus dem Phenol und dem Aldehyd "in situ" herzustellen.

Die Entwicklung besonders schnell laufender Druckmaschinen und der Trend, neben gestrichenen Papieren zunehmend auch nichtgestrichene Papiere mit erhöhter Saugfähigkeit zu bedrucken, stellt besonders hohe Anforderungen an die Qualität dieser Bindemittelharze. Insbesondere müssen sie dem Farbfilm einen guten Stand auf dem Bedruckstoff verleihen. Keinesfalls sollen Bindemittelharze zusammen mit Pigment in das Innere diffundieren, da dies mit Glanzverlust und verringerter Scheuerfestigkeit einhergeht. Mit den bekannten Bindemittelharzen können die gestiegenen Anforderungen nicht immer befriedigend erfüllt werden. Ein möglichst hoher Glanz ist aber für ein ansprechendes Druckergebnis außerordentlich wichtig.

Aufgabe der vorliegender Erfindung war daher, Bindemittelharze bereitzustellen, die einen möglichst hohen Glanz des Farbfilms auf dem Bedruckstoff auch bei höherer Verarbeitungsgeschwindigkeit gewährleisten.

Die Aufgabe wurde gelöst, indem bei der Herstellung modifizierter Naturharzsäureester auf die Mitverwendung von Phenolen und Phenol-Aldehyd-Kondensationsprodukten verzichtet wurde und Aldehyd mit dem Naturharz oder der Naturharzsäure umgesetzt wurde, und dann die erhaltenen Naturharz- oder Naturharzsäure-Aldehyd-Addukte mit Polyolen und Metallverbindungen zur Reaktion gebracht wurden und zur weiteren Modifizierung gegebenenfalls lediglich α,β-olefinisch ungesättigte Carbonsäuren oder deren Anhydride, Fettsäuren oder Kohlenwasserstoffharze mitverwendet wurden.

Gegenstand der Erfindung sind daher modifizierte Naturharzsäureester, bestehend aus Einheiten aus Verbindungen jeder der Gruppen
A) Naturharze und Naturharzsäuren,
B) Aldehyde und Aldehydacetale
C) Alkohole mit mindestens zwei Hydroxylgruppen,
D) Metallsalze
sowie gegebenenfalls aus Verbindungen einer oder mehrerer der Gruppen
E) α,β-ethylenisch ungesättigten Carbonsäuren und deren Anhydride,
F) Fettsäuren und Fettsäureester,
G) ethylenisch ungesättigte Kohlenwasserstoffharze.

Als Verbindungen der Substanzgruppen A) bis G) finden vorzugsweise Verwendung:
A) Kolophonium, Wurzelharz, Tallharz sowie disproportioniertes oder partiell hydriertes oder dimerisiertes Naturharz beliebiger Provenienz, wobei die Naturharze oder Naturharzsäuren auch in untergeordneten Mengen weitere Terpene enthalten können,
B) aliphatische (C₁-C₇)-Aldehyde, insbesondere Formaldehyd in seinen verschiedenen monomeren, oligomeren und polymeren Formen, Acetaldehyd, Butyraldehyd, Isobutyraldehyd, ferner Benzaldehyd, Furfurol, Glyoxal, wobei die Aldehyde auch in Form ihrer Acetale verwendet werden können,
C) bifunktionelle Alkohole, beispielsweise Glykole, oder trifunktionelle Alkohole, beispielsweise Trimethylolethan, Trimethylolpropan, Glycerin, oder tetrafunktionelle Alkohole,beispielsweise Pentaerythrit, oder pentafunktionelle Alkohole, beispielsweise dimerisiertes Trimethylolpropan, oder hexafunktionelle Alkohole, beispielsweise dimerisiertes Pentaerythrit, Sorbit,
D) Lithium-, Natrium-, Kalium-, Magnesium-, Calcium-, Zink-, Aluminiumsalze, vorzugsweise Oxide, Hydroxide, Carbonate, Hydrogencarbonate, Acetate, Alkoholate, insbesondere Salze von Zink, Magnesium und Calcium,
E) α,β-ethylenisch ungesättigte Carbonsäuren oder deren Anhydride, insbesondere Fumarsäure, Maleinsäure, Maleinsäureanhydrid, Itakonsäure, Zimtsäure, Acrylsäure, Methacrylsäure,
F) tierische, pflanzliche oder durch Raffination gewonnene Fettsäuren, ferner Fettsäureester, insbesondere Fettsäureglycerinester in Form von vegetabilischen oder tierischen Ölen, beispielsweise Tallöl, Baumwollsaatöl, Sojaöl, Leinöl, Holzöl, Fischöl, Kokosfett, hydriertes Kokosfett, dimerisierte und trimerisierte Fettsäuren,
G) Polymere oder Oligomere aus einfach und/oder mehrfach ethylenisch ungesättigten (C₅-C₉)-Kohlenwasserstoffen, insbesondere aus der Gruppe Isopren, Cyclopentadien, Inden, Cumaron, Styrol, oder Copolymerisate von ethylenisch ungesättigten Kohlenwasserstoffharzen mit Naturharzen oder Naturharzsäuren.

Gegenstand der Erfindung ist auch ein Verfahren zur Herstellung der modifizierten Naturharzsäureester durch Umsetzung eines Reaktionsprodukts, das aus Verbindungen der Gruppe A) mit Verbindungen der Gruppe B) vorab hergestellt worden ist, mit Verbindungen aus der Gruppe C) und Verbindungen aus der Gruppe D) sowie gegebenenfalls mit Verbindungen aus einer oder mehrerer der Gruppen E), F) und G) im Temperaturbereich von 100 bis 300 °C unter Wasserabspaltung.

Dabei beträgt der Anteil der einzelnen Komponenten, bezogen auf die Gesamtmenge der eingesetzten Komponenten (= 100 Gew.-%), vorzugsweise
30 bis 95 Gew.-%, insbesondere 40 bis 90 Gew.-%, Naturharz- oder Naturharzsäuren aus der Gruppe A),
1 bis 20 Gew.-%, insbesondere 3 bis 10 Gew.-%, Aldehyde oder Aldehydacetale aus der Gruppe B),
0,1 bis 20 Gew.-%, insbesondere 3 bis 15 Gew.-%, Polyole aus der Gruppe C), 0,1 bis 10 Gew.-%, berechnet als Oxid, Metallsalze aus der Gruppe D),
0 bis 20, insbesondere 2 bis 10 Gew.-%, α,β-ethylenisch ungesättigte Carbonsäuren oder deren Anhydride aus der Gruppe E),
0 bis 40 Gew.-%, insbesondere 1 bis 10 Gew.-%, Fettsäuren oder Fettsäureester aus der Gruppe F),
0 bis 70 Gew.-%, insbesondere 1 bis 25 Gew.-%, Kohlenwasserstoffharze aus der Gruppe G).

Zur Herstellung werden die in der Naturharzchemie üblichen Apparaturen verwendet. Die erfindungsgemäßen Produkte können dabei nach diskontinuierlichen wie auch kontinuierlichen Verfahren hergestellt werden.

Zunächst wird ein Naturharz- oder Naturharzsäure-Aldehyd-Addukt nach bekannten Methoden durch Reaktion des Naturharzes oder der Naturharzsäure mit dem Aldehyd oder Aldehydacetal hergestellt. Dieses Produkt kann gemäß DE-C 27 55 825 durch Umsetzung der Komponenten A) und B) in Lösungsmitteln, beispielsweise Toluol oder Alkohol, gegebenenfalls in Gegenwart von Katalysatoren, beispielsweise Chlorwasserstoff, vorzugsweise jedoch in der Schmelze in einem Temperaturbereich von 100 bis 200 °C hergestellt werden, wobei gegebenenfalls unter Druck von vorzugsweise 1 bis 10 bar gearbeitet wird. Vorzugsweise können dabei pro Mol verwendeter Naturharzsäure bis zu zwei Mol Aldehyd angelagert werden. Es ist jedoch auch möglich, weniger als ein Mol Aldehyd pro Mol Naturharz oder Naturharzsäure anzulagern, so daß die Ansätze überschüssiges Naturharz enthalten, das während der erfindungsgemäßen Umsetzung mit den übrigen Reaktionspartnern abreagieren kann. Die Stoffmengenverhältnisse von Aldehyd zu Naturharzsäure sind also 2:1 bis 0,5:1; bevorzugt 1;5:1 bis 0,7:1, besonders bevorzugt 1,2:1 bis 0,8:1 mol/mol. Bei der Herstellung der Naturharz- oder Naturharzsäure-Aldehyd-Addukte liegt dann das Gewichtsverhältnis Naturharz oder Naturharzsäure zu Aldehyd im allgemeinen zwischen 99,9 zu 0,1 und 70 zu 30.

Im folgenden Reaktionsschritt wird vorzugsweise das geschmolzene Naturharz- oder Naturharzsäure-Aldehyd-Addukt, das auch nicht umgesetztes Naturharz enthalten kann, vorgelegt. Dann können zur Harzmodifizierung Fettsäuren oder ethylenisch ungesättigte Kohlenwasserstoffharze oder α,β-olefinisch ungesättigte Carbonsäuren oder deren Anhydride zugegeben und bei Temperaturen von vorzugsweise 120 bis 200 °C zur Reaktion gebracht werden. Danach fügt man das Polyol und die Metallverbindung oder Gemische davon zu und erhitzt unter Wasserabspaltung auf Temperaturen von vorzugsweise 220 bis 270 °C.

Es ist jedoch auch möglich, die Reaktionspartner in veränderter Reihenfolge zum Naturharz- oder Naturharzsäure-Aldehyd-Addukt sowie bei unterschiedlichen Temperaturen zuzugeben, ohne daß sich die Produkteigenschaften wesentlich ändern. Beispielsweise kann die Metallverbindung auch erst bei hohen Reaktionstemperaturen von 220 bis 270 °C zugegeben werden. Dies ist bei relativ hohen Gehalten an Metallverbindung von Vorteil, um ein zu starkes, durch Wasserbildung hervorgerufenes Aufschäumen der Ansätze zu vermeiden. Es empfiehlt sich dann auch, die Metallverbindung nicht als Feststoff, sondern in suspendierter Form, beispielsweise in Xylol, dem Ansatz langsam zuzugeben.

Wird eine α,β-olefinisch ungesättigte Carbonsäure oder deren Anhydrid mitverwendet, ist es sinnvoll, daß der Alkohol erst nach der Reaktion der α,β-olefinisch ungesättigten Carbonsäure mit dem Naturharz- oder Naturharzsäure-Aldehyd-Addukt dem Reaktionsgemisch zugesetzt wird.

Der Fortgang der Reaktion kann zweckmäßigerweise durch die Bestimmung der Säurezahl verfolgt werden. So kann die Säurezahl des Harzgemisches anfangs vorzugsweise bis zu 200 mg KOH/g Harz betragen, ermittelt nach den üblichen Methoden. Sie fällt mit fortschreitender Umsetzung unter Wasserabspaltung fortlaufend ab. Die Veresterungsreaktion wird solange unter Destillation von Wasser, die auch unter azeotropen Bedingungen unter Verwendung eines inerten Schleppmittels, beispielsweise Xylol, erfolgen kann, fortgesetzt, bis die erfindungsgemäße Umsetzung das gewünschte Endstadium erreicht hat. Sobald die Säurezahl auf Werte unterhalb von vorzugsweise 50 mg KOH/g Harz abgesunken ist, kann zusätzlich zweckmäßigerweise durch Bestimmen der Viskositätswerte in einem Lösungsmittel, beispielsweise Toluol, der Endpunkt der Reaktion ermittelt werden. Gegebenenfalls werden flüchtige Anteile einschließlich des Schleppmittels durch Destillation, zuletzt unter Vakuum, aus dem Reaktionsprodukt entfernt.

Die erfindungsgemäßen Bindemittelharze fallen nach Abkühlen der Schmelze zunächst als Feststoff an. Die Schmelze kann jedoch durch Zugabe von Lösungsmittel, beispielsweise Toluol, Mineralöl oder auch Benzinfraktionen in einen Firnis überführt werden, wobei alle Übergänge von einer festen bis einer flüssigen Ausführung möglich sind.

Zur Bestimmung der Viskositäten werden beispielsweise die 25 Gew.-%igen toluolischen Lösungen mit einem üblichen Rotationsviskosimeter bei 23 °C vermessen. Die Viskositäten liegen vorzugsweise in einem Bereich von 2 bis 50 mPa·s, besonders bevorzugt von 5 bis 40; ganz besonders bevorzugt von 7 bis 35 mPa·s. Werden 50 Gew.-%ige toluolische Lösungen vermessen, so liegen die Viskositäten vorzugsweise in einem Bereich von 20 bis 2000 mPa·s. Die angegebenen Bereiche können jedoch auch über- oder unterschritten werden.

Das Molekulargewicht der erfindungsgemäßen Harze kann durch Gelpermeationschromatographie der Harzlösungen in Tetrahydrofuran (THF) an Polystyrolschaum in einem Permeationsmeßgerät nach bekannten Methoden ermittelt werden. Das mittlere Molekulargewicht (Gewichtsmittel M_{w}) der erfindungsgemäßen Harze liegt gemäß den erhaltenen Meßergebnisssen vorzugsweise bei Werten von M_{w} > 1000 g/mol und ist nach oben nicht kritisch begrenzt. Besonders bevorzugt liegt das mittlere Molekulargewicht M_{w} jedoch in einem Bereich von 1500 bis 50.000 g/mol, vorzugsweise von 2000 bis 40000 g/mol und besonders von 3000 bis 30000 g/mol.

Da sich bekanntermaßen Naturharze verschiedener Provenienz hinsichtlich ihrer Zusammensetzung unterscheiden können, beispielsweise können sie eine unterschiedliche Isomerenverteilung der Harzsäuren oder unterschiedliche Mengen weiterer Terpene aufweisen, können bei gleicher Rezeptur auch unterschiedliche Produkteigenschaften, beispielsweise bezüglich der Viskosität, resultieren. Die Rezeptur kann dann jedoch durch geringe Änderung der Massenanteile der Komponenten in der Reaktionsmischung dem jeweiligen Naturharz angepaßt werden um die gewünschten Eigenschaften zu erhalten.

Die erfindungsgemäßen Harze können auch während oder vorzugsweise nach der eigentlichen Umsetzung durch Zugabe weiterer Substanzen bearbeitet werden, wie es bei der Herstellung modifizierter Naturharzsäureester üblich ist.

Beispielsweise ist es möglich, niedermolekulare Verbindungen wie beispielsweise Kolophonium, Kolophoniumester, vegetabile Öle und Fettsäuren, Mineralöle, oder Polymere, wie Phenolharze, Polyester, Alkydharze, modifizierte Kohlenwasserstoffharze, Phenolharz-modifizierte Naturharzsäureester zuzugeben, um Lösungsviskositäten zu optimieren. Die Mengen sind jedoch untergeordnet und sollen nicht mehr als vorzugsweise 3 Gew.-%, bezogen auf das erfindungsgemäße Produkt in fester Form, betragen.

Weiterer Gegenstand der Erfindung ist die Verwendung der erfindungsgemäßen Harze als Bindemittelharze in Pigmentanreibungen und -konzentraten sowie in Druckfarben vorzugsweise für den Illustrationstiefdruck mit Toluol sowie den Offsetdruck.

Die erfindungsgemäßen Harze weisen eine ausgezeichnete Verträglichkeit mit anderen Bindemitteln, beispielsweise mit modifizierten Naturharzsäureestern des Standes der Technik, Resinaten, Kohlenwasserstoffharzen oder Chlorkautschuk auf, wodurch sie breit einsetzbar sind. Sie weisen darüber hinaus ein ausgezeichnetes Benetzungsverhalten für die im Illustrationstiefdruck verwendeten Pigmente auf.

Die erfindungsgemäßen Harze haben außerdem gegenüber den Phenolharzmodifizierten Naturharzsäureestern des Standes der Technik den Vorteil, vollkommen frei von Phenol zu sein. Damit besitzen die neuen erfindungsgemäßen Bindemittelharze eine vergleichsweise verbesserte Umweltverträglichkeit. Desgleichen weisen sie gegenüber den in der Patentschrift DE-C 27 55 825 beschriebenen Resinaten, die durch Umsetzung von Naturharzsäure-Formaldehyd-Addukten mit basischen Calciumverbindungen hergestellt werden, eine verbesserte Scheuerfestigkeit auf.

Die Toluol enthaltenden Tiefdruckfarben werden nach den üblichen Methoden formuliert. Dazu wird das geeignete Bindemittelharz in Toluol gelöst und dieser Firnis pigmentiert oder eine vorab hergestellte Pigmentanreibung mit Toluol verdünnt. Als Zuschlagstoffe können die sonst üblichen, beispielsweise Füllstoffe, wie Calciumcarbonat, oder grenzflächenaktive Mittel zur Verbesserung der Pigmentdispersion, wie Lecithin, oder Wachse zur Verbesserung der Scheuerfestigkeit, mitverwendet werden.

Weiterer Gegenstand der Erfindung ist die Verwendung der erfindungsgemäßen Harze als Bindemittelharze, vorzugsweise in Druckfarben für den Offsetdruck und den Buchdruck, wo sie insbesondere in Gelform als Gelfirnisse sehr vorteilhaft einsetzbar sind. Die Herstellung der Gelfirnisse erfolgt vorzugsweise durch Reaktion der Bindemittelharze mit Aluminiumverbindungen, wie beispielsweise Aluminiumalkoholat oder mit Acetessigester stabilisiertem Aluminiumalkoholat nach bekannten Verfahrensweisen in hochsiedendem Mineralöl. Die Gelfirnisse werden gegebenenfalls mit weiteren Bindemittelharzen, wie beispielsweise phenolharzmodifizierten Kolophoniumharzen, vegetabilischen Ölen, Wachsen, Füllstoffen, Sikkativen und weiteren Zusatzstoffen vermischt und durch Pigmentierung die für den Offset- und Buchdruck verwendbaren Druckfarben erhalten. Die erfindungsgemäßen Bindemittelharze können auch nach Verkochung mit Leinöl als Überdrucklacke oder Glanzfirnisse verwendet werden.

Wegen ihrer guten Verträglichkeit mit Aliphaten sind die erfindungsgemäßen neuen modifizierten Kolophoniumharze auch in Kombination mit niedrigsiedenden Benzinfraktionen einsetzbar, wie sie im Illustrationstiefdruck mit Benzin verwendet werden. Diese breite Einsetzbarkeit der neuen Verbindungen für derart unterschiedliche Druckverfahren, wie sie Offset-, Buch- und Tiefdruck darstellen, bedeutet einen ganz besonders wichtigen Vorteil. Weiterer Gegenstand der Erfindung ist daher die Verwendung der erfindungsgemäßen Harze als Bindemittelharze in Druckfarben für den Illustrationstiefdruck mit Benzin.

Die Erfindung wird durch die nachfolgenden Beispiele näher erläutert, ohne sie jedoch einzuschränken. Die in den Beispielen angegebenen Teile und Prozente beziehen sich auf das Gewicht, soweit nicht anders vermerkt.

### BEISPIELE

### Beispiel 1: Umsetzung eines Naturharzsäure-Formaldehyd-Addukts mit Pentaerythrit und Calciumhydroxid

In einem heizbaren 2 l-Autoklaven mit Rührwerk, Thermometer, Tropftrichter, Destillationsvorrichtung und Einfüllrohr werden unter einer Stickstoffatmosphäre 950 g handelsübliches Kolophonium, das auch als Naturharz oder Naturharzsäure bezeichnet wird, und 50 g Formaldehyd eine Stunde bei 160 °C unter einem Druck von 2,5 bar erhitzt. Danach wird die Apparatur drucklos gestellt. Danach werden 102 g Pentaerythrit zugefügt und die Mischung unter Destillation von Wasser auf 255 °C hochgeheizt. Dann werden innerhalb einer halben Stunde 42 g Calciumhydroxid, suspendiert in 100 g Xylol, zugetropft. Sobald die Säurezahl unter 40 mg KOH/g Harz gesunken ist, evakuiert man zur Entfernung flüchtiger Anteile 1 h bei 100 mbar. Nach Aufheben des Vakuums mit Stickstoff werden 972 g eines spröden, pulverisierbaren Harzes mit dem Erweichungspunkt 135 °C und der Säurezahl 35 mg KOH/g Harz erhalten. Eine 50 %ige Lösung in Toluol besitzt bei 23 °C eine Viskosität von 225 mPa·s. Durch Gelpermeationschromatographie wird ein mittleres Molekulargewicht M_{w} von 2150 g/mol ermittelt. Die Reaktionszeit zur Herstellung beträgt 8 Stunden.

### Beispiel 2: Umsetzung eines Naturharzsäure-Formaldehyd-Addukts mit Pentaerythrit und Zinkoxid

Man verfährt wie in Beispiel 1 angegeben mit der Abänderung, daß statt 42 g Calciumhydroxid 46 g Zinkoxid verwendet werden. Ausbeute: 981 g, Fp.: 138 °C, Säurezahl: 38 mg KOH/g Harz, Viskosität (50 %ig in Toluol): 184 mPa·s, M_{w}: 1550 g/mol.

### Beispiel 3: Umsetzung eines Naturharzsäure-Formaldehyd-Addukts mit Pentaerythrit und Magnesiumoxid

Man verfährt wie in Beispiel 1 angegeben mit der Abänderung, daß statt 42 g Calciumhydroxid 26 g Magnesiumoxid verwendet werden. Ausbeute: 952 g, Fp.: 145 °C, Säurezahl: 42 mg KOH/g Harz, Viskosität (50 %ig in Toluol): 298 mPa·s, M_{w}: 2320 g/mol.

### Beispiel 4: Umsetzung eines Naturharzsäure-Formaldehyd-Addukts mit Maleinsäureanhydrid, Pentaerythrit und Calciumhydroxid

In einem heizbaren 2 l-Autoklaven mit Rührwerk, Thermometer, Tropftrichter, Destilationsvorrichtung und Einfüllrohr werden unter einer Stickstoffatmosphäre 950 g handelsübliches Kolophonium, das auch als Naturharz oder Naturharzsäure bezeichnet wird, und 50 g Formaldehyd eine Stunde bei 160 °C unter einem Druck von 2,5 bar erhitzt. Danach wird die Apparatur drucklos gestellt. Anschließend wird das Reaktionsgemisch mit 45 g Maleinsäureanhydrid versetzt und weitere 30 Minuten bei 160 °C erhitzt. Danach werden 102 g Pentaerythrit zugefügt und die Mischung unter Destillation von Wasser auf 255 °C hochgeheizt. Dann werden innerhalb einer halben Stunde 42 g Calciumhydroxid suspendiert in 100 g Xylol zugetropft. Sobald die Säurezahl unter 40 mg KOH/g Harz gesunken ist, evakuiert man zur Entfernung flüchtiger Anteile 1 h bei 100 mbar. Nach Aufheben des Vakuums mit Stickstoff werden 1010 g eines spröden, pulverisierbaren Harzes mit dem Erweichungspunkt 135 °C und der Säurezahl 35 mg KOH/g Harz erhalten. Eine 50 %ige Lösung in Toluol besitzt bei 23 °C eine Viskosität von 46 mPa·s. Durch Gelpermeationschromatographie wird ein mittleres Molekulargewicht M_{w} von 1600 g/mol ermittelt. Die Reaktionszeit zur Herstellung beträgt 8 Stunden.

### Beispiel 5: Umsetzung eines Naturharzsäure-Formaldehyd-Addukts mit Maleinsäureanhydrid, Pentaerythrit und Zinkoxid

Man verfährt wie in Beispiel 4 angegeben mit der Abänderung, daß statt Calciumhydroxid 46 g Zinkoxid verwendet werden. Ausbeute: 1014 g, Säurezahl: 66 mg KOH/g Harz, Festpunkt: 137 °C, Viskosität einer 50 %igen Lösung in Toluol: 20 mPa·s, M_{w}: 1770 g/mol, Reaktionszeit: 8 Stunden.

### Beispiel 6: Umsetzung eines Naturharzsäure-Formaldehyd-Addukts mit Maleinsäureanhydrid, Pentaerythrit und Magnesiumoxid

Man verfährt wie in Beispiel 4 angegeben mit der Abänderung, daß statt Calciumhydroxid 23 g Magnesiumoxid verwendet werden. Ausbeute: 995 g, Säurezahl: 27 mg KOH/g Harz, Festpunkt: 145 °C, Viskosität einer 50 %igen Lösung in Toluol: 48 mPa·s, M_{w}: 1635 g/mol, Reaktionszeit: 8 Stunden.

### Beispiel 7: Umsetzung eines Naturharzsäure-Formaldehyd-Addukts mit Maleinsäureanhydrid, Pentaerythrit, Magnesiumoxid und hydriertem Kokosfett

In einem heizbaren 2 l-Autoklaven mit Rührwerk, Thermometer, Tropftrichter, Destillationsvorrichtung und Einfüllrohr werden unter einer Stickstoffatmosphäre 950 g handelsübliches Kolophonium, das auch als Naturharz oder Naturharzsäure bezeichnet wird, und 50 g Formaldehyd eine Stunde bei 160 °C unter einem Druck von 2,5 bar erhitzt. Danach wird die Apparatur drucklos gestellt. Anschließend wird das Reaktionsgemisch mit 50 g Maleinsäureanhydrid versetzt und weitere 30 Minuten bei 160 °C erhitzt. Danach werden 146 g Pentaerythrit und 10 g hydriertes Kokosfett zugefügt und die Mischung unter Destillation von Wasser auf 255 °C hochgeheizt. Dann werden dem Ansatz 26 g Magnesiumoxid hinzugefügt. Sobald die Säurezahl unter 35 mg KOH/g Harz gesunken ist, evakuiert man zur Entfernung flüchtiger Anteile 1 h bei 100 mbar. Nach Aufheben des Vakuums mit Stickstoff werden 1019 g eines spröden, pulverisierbaren Harzes mit dem Erweichungspunkt 135 °C und der Säurezahl 10 mg KOH/g Harz erhalten. Eine 25 %ige Lösung in Toluol besitzt bei 23 °C eine Viskosität von 3 mPa·s und eine 50 %ige Lösung eine Viskosität von 551 mPa·s. Durch Gelpermeationschromatographie wird ein mittleres Molekulargewicht M_{w} von 5354 g/mol ermittelt. Die Reaktionszeit zur Herstellung beträgt 8 Stunden.

### Beispiel 8: Umsetzung eines Naturharzsäure-Formaldehyd-Addukts mit Maleinsäureanhydrid, Pentaerythrit, Calciumhydroxid und einem Kohlenwasserstoffharz

In einem heizbaren 2 l-Autoklaven mit Rührwerk, Thermometer, Tropftrichter, Destillationsvorrichtung und Einfüllrohr werden unter einer Stickstoffatmosphäre 500 g handelsübliches Kolophonium, das auch als Naturharz oder Naturharzsäure bezeichnet wird, und 25 g Formaldehyd eine Stunde bei 160 °C unter einem Druck von 2,5 bar erhitzt. Danach wird die Apparatur drucklos gestellt. Danach gibt man der Schmelze 500 g eines Kohlenwasserstoffharzes auf Cyclopentadien-Basis (Jodzahl: 171 g Jod/100 g Harz) zu und rührt während einer weiteren halben Stunde. Anschließend wird das Reaktionsgemisch mit 50 g Maleinsäureanhydrid versetzt und weitere 30 Minuten bei 160 °C erhitzt. Danach werden 68 g Pentaerythrit zugefügt und die Mischung unter Destillation von Wasser auf 255 °C hochgeheizt. Dann werden dem Ansatz 36 g Calciumhydroxid hinzugefügt. Sobald die Säurezahl unter 35 mg KOH/g Harz gesunken ist, evakuiert man zur Entfernung flüchtiger Anteile 1 h bei 100 mbar. Nach Aufheben des Vakuums mit Stickstoff werden 982 g eines spröden, pulverisierbaren Harzes mit dem Erweichungspunkt 138 °C und der Säurezahl 20 mg KOH/g Harz erhalten. Eine 25 %ige Lösung in Toluol besitzt bei 23 °C eine Viskosität von 5 mPa·s und eine 50 %ige Lösung eine Viskosität von 202 mPa·s. Durch Gelpermeationschromatographie wird ein mittleres Molekulargewicht M_{w} von 3481 g/mol ermittelt. Die Reaktionszeit zur Herstellung beträgt 8 Stunden.

### Beispiel 9: Umsetzung eines Naturharzsäure-Formaldehyd-Addukts mit Maleinsäureanhydrid, Pentaerythrit, Calciumhydroxid, hydriertem Kokosfett und einem Kohlenwasserstoffharz

Man verfährt wie in Beispiel 8 angegeben, mit der Abänderung, daß dem Ansatz zusätzlich 20 g hydriertes Kokosfett zugefügt werden. Ausbeute: 1003 g, Säurezahl: 27 mg KOH/g Harz, Festpunkt: 132 °C, Viskosität einer 50 %igen Lösung in Toluol: 160 mPa·s, M_{w}: 2810 g/mol, Reaktionszeit 8 Stunden.

### Beispiel 10: Umsetzung eines Naturharzsäure-Formaldehyd-Addukts mit Maleinsäureanhydrid, Pentaerythrit und Lithiumhydroxid

Man verfährt wie in Beispiel 4 angegeben mit der Abänderung, daß das Calciumhydroxid durch 2 g Lithiumhydroxid ersetzt und 136 g Pentaerythrit verwendet werden. Ausbeute: 976 g, Säurezahl: 27 mg KOH/g Harz, Festpunkt: 125 °C, Viskosität einer 50 %igen Lösung in Toluol: 188 mPa·s, M_{w}: 18110 g/mol, Reaktionszeit 8 Stunden.

### Anwendungstechnischer Vergleich

Nach üblichen Verfahren werden jeweils aus den Bindemittelharzen des Beispiels 4 (Farbe A) und einem handelsüblichen Naturharzsäureester, der mit einem Phenol-Formaldehyd-Kondensationsprodukt modifiziert ist (Zinkgehalt, bestimmt als ZnO: 4,5 Gew.-%, Viskosität: (25 %ig in Toluol) bei 23 °C: 4,5 mPa·s (Farbe B)), mit Rotpigment (®Litholrubin, Fa. BASF AG) Pigmentkonzentrate für den Illustrationstiefdruck mit Toluol hergestellt, die dann mit Toluol auf eine Druckviskosität von 23 s im 3 mm Auslaufbecher eingestellt werden. Farbe A besitzt dann einen Pigmentgehalt von 8,5 Gew.-% und einen Harzgehalt von 40 Gew.-% und Farbe B von 8,5 und 32 Gew.-%.

Mit diesen Farben wird im Tiefdruckverfahren stark saugendes Papier bedruckt. Der Glanz der Andrucke, der für ein gutes drucktechnisches Ergebnis möglichst hoch sein soll, wird sodann mit dem Laborreflektometer nach Lange bei einem Einstrahlwinkel von 60 ° gemessen. Er liegt bei der mit dem erfindungsgemäßen Harz formulierten Farbe höher als bei der mit dem Vergleichsharz formulierten Farbe.

| | | |
|---|---|---|
| Farbe | A | B |
| Glanz [%] | 66 | 58 |

## Patentansprüche

1. Modifizierter Naturharzsäureester, bestehend aus Einheiten aus Verbindungen jeder der Gruppen
A) Naturharze und Naturharzsäuren,
B) Aldehyde und Aldehydacetale,
C) Alkohole mit mindestens zwei Hydroxylgruppen,
D) Metallsalze
sowie gegebenenfalls aus Verbindungen einer oder mehrer der Gruppen
E) α,β-ethylenisch ungesättigte Carbonsäuren und deren Anhydride,
F) Fettsäuren und Fettsäureester,
G) ethylenisch ungesättigte Kohlenwasserstoffharze.

2. Modifizierter Naturharzsäureester nach Anspruch 1, dadurch gekennzeichnet, daß er aus Einheiten aus jeder der Gruppen
A) Naturharze oder Naturharzsäuren,
B) Aldehyde und Aldehydacetale,
C) Alkohole mit mindestens zwei Hydroxylgruppen,
D) Metallsalze,
E) α,β-ethylenisch ungesättigten Carbonsäuren und deren Anhydriden
besteht.

3. Modifizierte Naturharzsäureester nach Anspruch 1, dadurch gekennzeichnet, daß die Metallsalze Lithium-, Natrium-, Kalium-, Magnesium-, Calcium-, Zink- oder Aluminiumsalze in Form ihrer Oxide, Hydroxide, Carbonate, Hydrogencarbonate, Acetate, Alkoholate, sind.

4. Verfahren zur Herstellung des modifizierten Naturharzsäureesters durch Umsetzung eines Reaktionsprodukts, das aus Verbindungen der Gruppe A) mit Verbindungen der Gruppe B) vorab hergestellt worden ist, mit Verbindungen aus der Gruppe C) und Verbindungen aus der Gruppe D) sowie gegebenenfalls mit Verbindungen aus einer oder mehrerer der Gruppen E), F) und G) im Temperaturbereich von 100 bis 300 °C unter Wasserabspaltung.

5. Verfahren nach Anspruch 4, dadurch gekennzeichnet, daß
30 bis 95 Gew.-% Naturharze oder Naturharzsäuren aus der Gruppe A),
1 bis 20 Gew.-% Aldehyde oder Aldehydacetale aus der Gruppe B),
0,1 bis 20 Gew.-% Polyolkomponenten aus der Gruppe C),
0,1 bis 10 Gew.-%, berechnet als Oxid, Metallverbindungen aus der Gruppe D),
0 bis 20 Gew.-% α,β-ethylenisch ungesättigte Carbonsäuren oder deren Anhydride aus der Gruppe E),
0 bis 40 Gew.-% Fettsäurverbindungen aus der Gruppe F),
0 bis 70 Gew.-% Kohlenwasserstoffharze aus der Gruppe G),
miteinander umgesetzt werden, wobei die Gesamtmenge der eingesetzten Komponenten 100 Gew.-% beträgt.

6. Verfahren nach Anspruch 4, dadurch gekennzeichnet, daß das Gewichtsverhältnis Naturharz oder Naturharzsäure zu Aldehyd zwischen 99,9 zu 0,1 und 70 zu 30 liegt.

7. Verwendung des modifizierten Naturharzsäureesters nach Anspruch 1 in Pigmentanreibungen oder Pigmentkonzentraten.

8. Verwendung des modifizierten Naturharzsäureesters nach Anspruch 1 in Druckfarben.

9. Verwendung des modifizierten Naturharzsäureesters nach Anspruch 1 in Druckfarben für den Illustrationstiefdruck mit Toluol.
